# EUROPEAN PATENT APPLICATION

(11) **EP 4 517 566 A1**
(43) Date of publication of application: **05.03.2025**
(21) Application number: 23193751.7
(22) Date of filing: 28.08.2023
(51) Int. Cl.: G06F 21/36

(54) **COMPUTER-IMPLEMENTED METHOD FOR GRAPHICAL USER AUTHENTICATION USING MACHINE LEARNING TO GENERATE CANDIDATE IMAGES CORRESPONDING TO A USER SECRET SENTENCE**

(71) Applicant: Siemens Aktiengesellschaft, 80333 München (DE)
(72) Inventor: Feldmeyer, Alfred, 83022 Rosenheim (DE); Mittermeier, Ludwig Andreas, 81541 München (DE)
(74) Representative: Siemens Patent Attorneys

(57) **Abstract**

The invention relates to a computer-implemented method for user authentication, comprising the steps: a. Receiving input data with text data or voice data from a user to be authenticated by means of an input interface; wherein the input data comprises at least one sentence with a plurality of interconnected words; wherein at least one word of the plurality of interconnected words represents at least one required characteristic of at least one object; wherein the at least one object is specified by the user; b. generating at least one image based on the input data by means of a machine learning model; wherein the machine learning model is trained to align tokens with images; wherein the at least one image comprises a plurality of image segments; wherein each image segment of the plurality of image segments comprises at least one object; c. identifying and selecting at least one valid image segment of the plurality of image segments in the at least one image by the user, if the at least one image comprises at least one valid image segment; wherein the at least one valid image segment is compliant with the at least one object specified by the user; and authentifying the user by the positive identification by the user; or d. recognizing that the at least one image solely comprises invalid image segments by the user, if the image solely comprises invalid image segments; wherein each invalid image segment of the plurality of invalid image segments is incompliant with the at least one object specified by the user; and authentifying the user by validating the at least one image by the user or repeating the steps b. and c. until the at least one image comprises at least one valid image segment to be identified by the user and the user is authenticated. Further, the invention relates to a corresponding computer program product and technical system.

## Description

### 1. Technical field

The present invention relates to a computer-implemented method for user authentication. Further, the invention relates to a corresponding computer program product and technical system.

### 2. Prior art

The knowledge-based authentication (KBA) is known from the prior art and is widely used. The KBA verifies a person's identity by asking them for specific information that only they should know, such as a password, a personal identification number (PIN) or a drawing pattern. Usually, it is used for unlocking the computing devices like smartphones, tablets or access terminals.

The disadvantage, however, is that the personal information is shared on social media sites, severely reducing the security value of the KBA. Passwords are also shared, stolen or figured out with password cracking tools. For example, a person or a camera nearby the computing device can easily observe which password is being entered into the computing device or which figure is being drawn. Moreover, since the password and the figure remain the same over a longer time period, fat spots or grease patterns occur on the touch screen of the computing device, which helps an intruder to gain access.

Modern computing devices often offer biometric authentication mechanisms as well - like face recognition or fingerprint detection. The biometric authentication mechanisms still have the disadvantage that they can be deluded, biometrical information can be copied or imitated. Hence, most of the time, the KBA is set up as a backup mechanism to unlock the computing device.

Though biometrical authentication is considered to be the most secure, knowledge-based authentication is still an attack vector, since it usually serves as a backup mechanism for the first one.

It is therefore an objective of the invention to provide a computer-implemented method for user authentication, which is more efficient and more reliable.

### 3. Summary of the invention

This problem is according to one aspect of the invention solved by a computer-implemented method for user authentication, comprising the steps:
a. Receiving input data with text data or voice data from a user to be authenticated by means of an input interface; wherein
   the input data comprises at least one sentence with a plurality of interconnected words; wherein
   at least one word of the plurality of interconnected words represents at least one required characteristic of at least one object; wherein
   the at least one object is specified by the user;
b. generating at least one image based on the input data by means of a machine learning model; wherein
   the machine learning model is trained to align tokens with images; wherein
   the at least one image comprises a plurality of image segments; wherein
   each image segment of the plurality of image segments comprises at least one object;
c. identifying and selecting at least one valid image segment of the plurality of image segments in the at least one image by the user, if the at least one image comprises at least one valid image segment; wherein
   the at least one valid image segment is compliant with the at least one object specified by the user; and
   authentifying the user by the positive identification by the user; or
d. recognizing that the at least one image solely comprises invalid image segments by the user, if the image solely comprises invalid image segments; wherein
   each invalid image segment of the plurality of invalid image segments is incompliant with the at least one object specified by the user; and
   authentifying the user by invalidating the at least one image by the user or repeating the steps b. and c. until the at least one image comprises at least one valid image segment to be identified by the user and the user is authenticated.

Accordingly, the invention is directed to a computer implemented method for user authentication. In a first step, the input data is provided by a user, which has to be authenticated.

The input data comprises one or more sentences in text form or voice form. The sentences can be equally referred to as prompts. The sentence comprises words, which are interconnected or linked. The words are related to characteristics of the object, which is predefined by the user. Hence, the sentence describes or specifies the object.

In the second step, the input data is applied on the machine learning model to generate the image. The resulting image comprises image segments. In other words, the image is divided into image segments. The image segments comprise the objects. The image segments can be valid or invalid. The valid image segments are compliant with the object specified by the user. The invalid image segments are not compliant with the object specified by the user. The image can comprise valid and/or invalid image segments.

The user can be authenticated by distinct authentication mechanisms. According to the positive identification, the user identifies one or more valid image segments in the generated image and is thereby authenticated. The image, in this case, comprises one or more valid image segments, which can be identified.

Alternative to the positive identification, the user recognizes that the generated image solely comprises invalid image segments. The image, in this case, does not comprise any valid image segment, which can be identified. Hence, the positive identification is not applicable. The user is authenticated by invalidating the image.

Alternative to invalidating the image, the user is authenticated by repeating the steps b. and c. until an image is generated, which comprises one or more valid image segments. Then, the valid image segments can be identified by the user, enabling the positive identification. The selection of the two authentication options - invalidating and repeating the steps - can depend on a selection criterion, like use case or setting a mode for the authentication option.

The advantage of the present invention is that the authentication is more efficient and more reliable compared to prior art solutions like passwords.

In an aspect the input data is inputted by means of an input interface of a computing device. Accordingly, the input data can be received and/or transmitted via one or more input interfaces of a technical unit, wherein the technical unit can be designed as any computing unit or computing device. Accordingly, additionally, or alternatively, the output data can be sent via one or more output interfaces. This way, data can be efficiently transmitted between computing units, thereby reducing data traffic and allowing for bidirectional data exchange.

In a further aspect the computing device is designed as a smartphone or a tablet. Accordingly, the computing device can be designed as e.g. any edge device. The advantage is that the computing device can be flexibly selected, preferably depending on a selection criterion like use case, underlying technical system, authentication mechanism etc..

In a further aspect the machine learning model is designed as a generative Artificial Intelligence model.

In a further aspect the generative Artificial Intelligence model is a text-to image model, preferably a stable diffusion model or a latent diffusion model.

In a further aspect the input interface is a touch screen. Accordingly, the user can interact with the computing device by means of the touch screen or touch pad.

In a further aspect the size of each image segment of the at least one image is large enough that each image segment is unambiguously selectable by the user. Accordingly, the size of the image segment is optimized with regard to an efficient and reliable selection by the user.

In a further aspect the step c. identifying and selecting at least one valid image segment of the plurality of image segments in the at least one image by the user, if the at least one image comprises at least one valid image segment, is implemented by touching on the at least one valid image segment by means of the touch screen. Accordingly, the image segment is identified and selected by touching on the touch screen by the user. Touching on the touch screen can be interpreted as one touch event.

In a further aspect in step d. the at least one image with all image segments of the plurality of image segments is invalidated by swiping across the at least one image by the user. Accordingly, contrary to touching and positive identification, the user swipes across the image and/or the image segment of the image. Swiping across can be interpreted as one other touch event. Swiping across can be used for invalidating the image and/or the image segment.

In a further aspect the at least one image and/or at least one image segment is refreshed or redrawn by swiping over the at least one image and/or at least one image segment by the user. Swiping across can be used for refreshing or redrawing the image and/or the image segment.

In a further aspect the number of interactions between the user and the touch screen is limited to a specified number of touch events, preferably depending on an authentication mechanism. Accordingly, a threshold is predefined to limit the number of touch events and hence interactions between the user and the touch screen. This advantageously increases the efficiency.

A further aspect of the invention is a computer program product directly loadable into an internal memory of a computer, comprising software code portions for performing the steps according to any one of the preceding claims when said computer program product is running on a computer.

A further aspect of the invention is a technical system for performing the aforementioned computer-implemented method. Preferably, the technical system is designed as computing device with a touchscreen.

### 4. Short description of the drawings

In the following detailed description, presently preferred embodiments of the invention are further described with reference to the following figures:
- Fig. 1: illustrates a flowchart of the computer-implemented method according to the invention.
- Fig. 2: illustrates the technical system according to an embodiment.
- Fig. 3: illustrates the generation or drawing order of the image segments according to an embodiment.
- Fig. 4: illustrates the generated image with the image segments according to an embodiment.
- Fig. 5: illustrates a flowchart of the setup process according to an embodiment.
- Fig. 6: shows examples to generate an elephant in color and with hat.

### 5. Detailed description of preferred embodiments

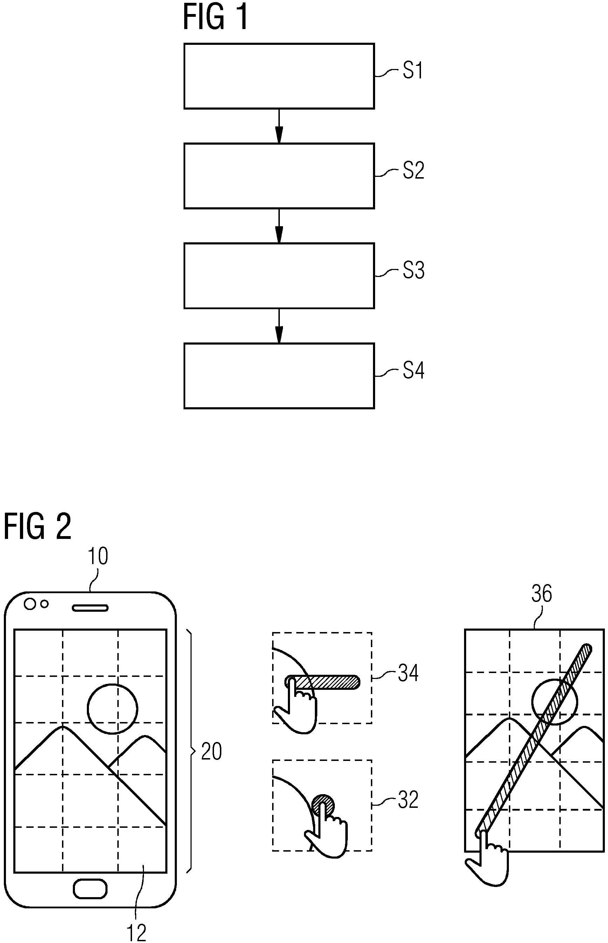

Figure 1 illustrates a flowchart of the computer-implemented method according to the invention with the method steps S1 to S4.

The method according to the invention can be used as fallback for the biometrical authentication or any other main authentication mechanism. Alternatively, the method can be used as main authentication mechanism. In this case, e.g. a PIN or the former defined sentences can be used as fallback.

At setup-time of the authentication mechanism, the user enters a sentence. The sentence defines characteristics for the graphical elements that will later be shown for unlocking the computing device. An exemplary sentence is "red dogs that do not eat anything". The definition of a secret passcode or pattern according to prior art is replaced.

The computing device 10 shows the generated image 20 on the touch screen 22. The image 20 is generated using the generative AI model, which aligns tokens with images 20. The image 20 can be generated on-the-fly locally (on the computing device 10). The image 20 comprises characteristics that the user has pre-defined or specified before.

Preferably, the characteristics do rarely appear in the same form. Instead, other elements or characteristics are randomly added. The user is authenticated by identifying the image segments 22, which contain all required characteristics.

The location of the characteristics within the image 20 as well as their appearance can be considered as unique per login since the images 20 are randomly generated. The advantage is that a possible intruder who is observing the authentication process is not able to identify all required characteristics on the first catch.

Fig. 2 illustrates the technical system 10 according to an embodiment. Preferably the technical system 10 is a computing device and even more preferably a smartphone. As illustrated, the user interacts with the touch screen 12 of the smartphone 10.

The computing device 10 the user interacts with is not limited to smartphones. Any computing device 10 with a touchscreen 12, and enough computing power can be utilized to generate an image 20. The required computing power can depend on the computing device itself, the resolution and/or the used authentication mechanism.

As depicted in Figure 2, the image 20 is divided into several image segments 22. The amount or ratio of the image segments 22 is not fixed. According to an embodiment the image segments 22 are bigger than 1,5 cm on their smallest side. This size has proven to be advantageous to ensure a precise touch interaction. Thereby, the image segments 22 comprise the objects. The object needs to be compliant with the object specified by the user in case of the positive identification. The user has to identify and select it to get access to the computing device 10.

The interactions with the computing device 10 can be limited to e.g. three kind of touch events. Moreover, additionally or alternatively, the number of interactions or threshold can depend on the selected authentication mechanism.

Exemplary touch events:
The image segment 22 of the image 20 is refreshed or redrawn by swiping over it 34 according to an embodiment. The selection of the image segment 22 of the image 20, which comprises the correct or valid object, is implemented by touching or tapping on it 32 according to an embodiment. The whole image 20 with all its image segments 22 is invalidated (e.g. no correct object is visible) by swiping across it 36 according to an embodiment.

Generation of the image:
According to an embodiment, the image 20 is generated by means of the text-to-image model as preferred AI model. The AI model is trained to associate a token or a word with the object to be generated.

The text-to-image model can be defined as a stable diffusion or a latent diffusion model, whereas the latter is preferred since the generation is compute-wise more efficient.

If one token in the input sentence is unknown, the result will lead to images 20, which will not comprise a recognizable object. This effect can be overcome by extracting all tokens from the input data, which has been used to generate the AI model and to rank them by their appearance. If a token is appearing only once in the input data, the token is preferably removed. Alternatively, additional data can be added or the data is balanced before training. The list of tokens can be used to validate the setup process.

According to an embodiment, the image 20 is generated using outpainting. Thereby, outpainting is a technique where the AI model extends a given image in a photo-realistic way. That can also happen for selected image segments 22 only. The object within the image segment 22 can be defined by a positive sentence or a negative sentence, whereas the latter defines what should not appear in the generated image segment.

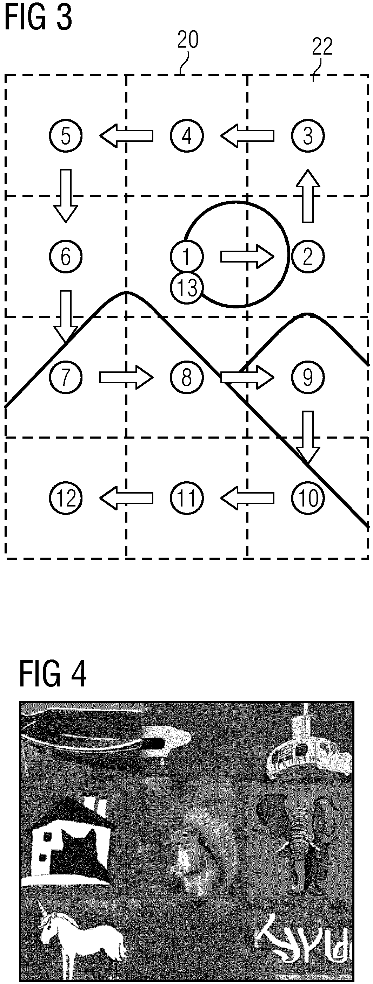

Fig. 3 illustrates the generation or drawing order of the image segments.

As depicted in Figure 3, the sequence in which the image segments 22 are drawn can be arbitrary. According to an embodiment, the following requirements are met for drawing.
- The starting image segment 22 is surrounded by eight other image segments 22.
- The starting image segment 22 uses a sentence, which generates a pattern (image segment 1 in Figure 3). This pattern will continue by other image segments 22 surrounding it. A possible sentence could be "abstract pattern", "stone pattern", "psychedelic", etc.
If the last image segment 22 has been generated, the first image segment 22 will be erased and regenerated with a sentence requesting an object.

Fig. 4 illustrates the generated image with the image segments according to an embodiment.

The objects are generated from the former defined sentences or by using random token combination from the list of allowed tokens. The position of the random elements and the defined sentences, which are generating the image segments 22 with the objects to identify can be random.

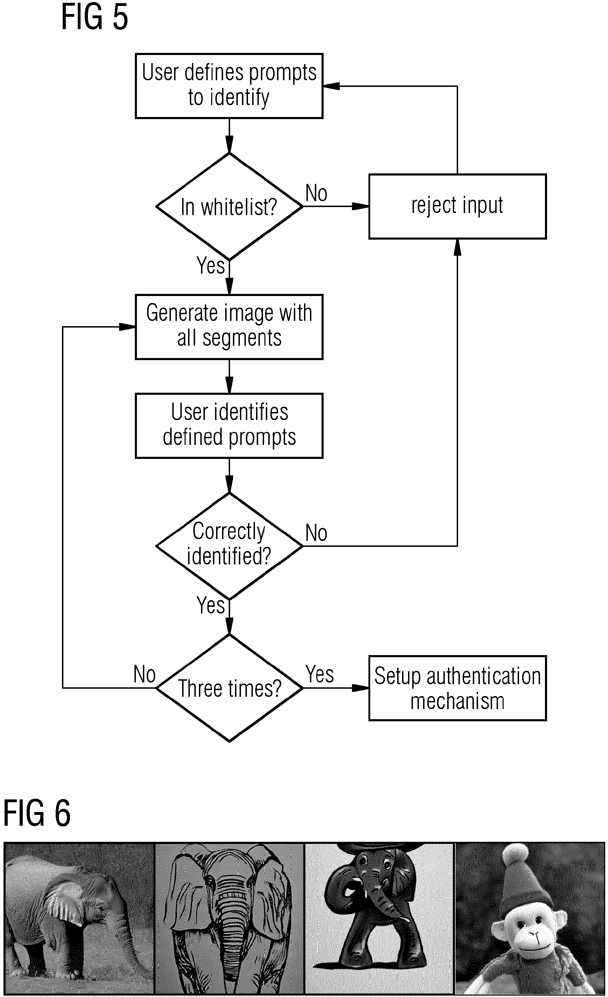

Fig.5 illustrates a flowchart of the process to set up a set of sentences according to an embodiment.

The required number of sequences can depend on the authentication mechanism. The words or tokens within the sentences are checked against the previously extracted list to ensure they are usable (whitelisted). If that is the case, the user needs to identify the entered sentences from the generated images e.g. three times. Only if the user identifies and selects the sentences correctly without any mistake the new authentication process is set up.

Analog to setting a password, the user needs to define a sequence of tokens to generate the images from. The token should be a noun minimally, but can be any sentence. Preferably, the AI model is verified to be able to generate images, which comprise the objects, described in the defined sentences.

Analog to defining a password (passcode) in the setup phase, the user needs to define sentences which are then used to generate images from. As part of the authentication setup process, the generated images are shown to the user who then gives feedback whether the user can correctly identify the generated images.

Fig. 6 shows examples to generate an elephant in color and with hat.

### Implementation example for Low Security Login

1. At setup time, the user defines at least one sentence that defines the object, e.g. "A black cat with green eyes looking to the left side".
2. The AI model generates additional sentences by randomly replacing every word, which is not a stop word, by a word in the same class, wherein a class is "color", "direction", "size", "doing" or "animal". Preferably, at least 3-4 additional variant sentences are generated.
3. A variant of the defined sentences or a completely arbitrary or random sentence is used to generate an image segment.
4. Authentication:
   a. The user taps on the image segments, which comprise an object that is compliant with the previously described sentences that the user defined. If there are multiple valid objects available that are compliant, all of them have to be identified by tapping on them. Preferably, he needs to be successful just once.
   b. If an authentication image comprises no compliant object, the user can express this by swiping across the image. If the user swipes across the image, this will count as a positive reaction from the user in the authentication process. However, preferably, only swiping across is not enough for a successful authentication process. Instead, preferably, at least another image will be generated and shown to the user which comprises at least one valid object, wherein the user has to react in the right way. If the user misses to tap on a valid object, this will count as negative attempt.
   c. If the user taps on an object, which is not compliant with a defined sentence, the input will count as negative attempt.

### Implementation example for Mid-Security Login

1. Several nouns with adjectives or verbs are set as defined sentences, e.g. "yellow car", "running dog", "flying cat".
2. A number of variants are generated for each sentence by exchanging the classes, e.g. "yellow car" à "red car", "purple car", "purple truck".
3. Random sentences are generated to fill them, as well as one or more variants for each of them, preferably depending on the number of image segments.
4. For each image segment of the authentication a valid object is generated according to the correct sentence and several objects according to the variant sentences. This results in invalid objects.

The navigation between the variants and the defined sentences can be implemented by swiping over a single image segment.

### 5. Authentication:

a. The user swipes over the image segments until all his defined sentences (the generated objects) are visible.
b. The user taps on all valid objects.

## Claims

1. Computer-implemented method for user authentication, comprising the steps:
a. Receiving input data with text data or voice data from a user to be authenticated by means of an input interface (12) (S1); wherein
the input data comprises at least one sentence with a plurality of interconnected words; wherein
at least one word of the plurality of interconnected words
represents at least one required characteristic of at least
one object; wherein
the at least one object is specified by the user;
b. generating at least one image (20) based on the input data by means of a machine learning model (S2); wherein the machine learning model is trained to align tokens with
images; wherein
the at least one image (20) comprises a plurality of image
segments (22); wherein
each image segment of the plurality of image segments (22)
comprises at least one object;
c. identifying and selecting at least one valid image segment (22) of the plurality of image segments (22) in the at least one image (20) by the user, if the at least one image (20) comprises at least one valid image segment (22) (S3); wherein
the at least one valid image segment (22) is compliant with the at least one object specified by the user; and authentifying the user by the positive identification by the
user; or
d. recognizing that the at least one image (20) solely comprises invalid image segments (22) by the user, if the image (20) solely comprises invalid image segments (22) (S4); wherein each invalid image segment (22) of the plurality of invalid image segments (22) is incompliant with the at least one object specified by the user; and
authentifying the user by invalidating the at least one image (20) by the user or repeating the steps b. and c. until the at least one image (20) comprises at least one valid image segment (22) to be identified by the user and the user is authenticated.

2. Computer-implemented method according to claim 1,
wherein the input data is inputted by means an input interface (12) of a computing device (10).

3. Computer-implemented method according to claim 1 or claim 2, wherein the computing device (10) is designed as a smartphone or a tablet.

4. Computer-implemented method according to any of the preceding claims, wherein the machine learning model is designed as a generative Artificial Intelligence model.

5. Computer-implemented method according to claim 4,
wherein the generative Artificial Intelligence model is a text-to image model, preferably a stable diffusion model or a latent diffusion model.

6. Computer-implemented method according to any of the preceding claims, wherein the input interface (12) is a touchscreen (12).

7. Computer-implemented method according to claim 6,
wherein the size of each image segment (22) of the at least one image (20) is large enough that each image segment is unambiguously selectable by the user.

8. Computer-implemented method according to claim 6 or claim 7, wherein the step c. identifying at least one valid image segment (22) of the plurality of image segments (22) in the at least one image (20) by the user, if the at least one image comprises at least one valid image segment (22),
is implemented by touching on (32) the at least one valid image segment (22) by means of the touch screen (12) .

9. Computer-implemented method according to one of the claims 6 to 8, wherein in step d. the at least one image (20) with all image segments (22) of the plurality of image segments (22) is invalidated by swiping across (36) the at least one image (20) by the user.

10. Computer-implemented method according to one of the claims 6 to 9, wherein the at least one image (20) and/or at least one image segment (22) is refreshed or redrawn by swiping over (34) the at least one image (20) and/or at least one image segment (22) by the user.

11. Computer-implemented method according to one of the claims 6 to 10, wherein the number of interactions between the user and the touch screen (12) is limited to a specified number of touch events (32, 34, 36), preferably depending on an authentication mechanism.

12. A computer program product directly loadable into an internal memory of a computer, comprising software code portions for performing the steps according to any one of the preceding claims when said computer program product is running on a computer.

13. Technical system for performing the method according to claims 1 - 11.
